**Europäisches Patentamt**

**European Patent Office**

**Office européen des brevets**

(19)

(11) Veröffentlichungsnummer: **0 116 883**
**A2**

## (12) EUROPÄISCHE PATENTANMELDUNG

(21) Anmeldenummer: **84101121.6**

(22) Anmeldetag: **03.02.84**

(51) Int. Cl.³: **G 06 F 13/00**

(30) Priorität: **18.02.83 DE 3305693**

(43) Veröffentlichungstag der Anmeldung:
**29.08.84 Patentblatt 84/35**

(84) Benannte Vertragsstaaten:
**AT BE CH DE FR GB IT LI LU NL SE**

(71) Anmelder: **Nixdorf Computer Aktiengesellschaft**
**Fürstenallee 7**
**D-4790 Paderborn(DE)**

(72) Erfinder: **Stähle, Peter, Dipl.-Ing.**
**Brede 6**
**D-4790 Paderborn-Dahl(DE)**

(74) Vertreter: **Schaumburg, Schulz-Dörlam & Thoenes**
**Mauerkircherstrasse 31 Postfach 86 07 48**
**D-8000 München 86(DE)**

(54) **Schaltungsanordnung zur Zwischenspeicherung von Befehlsworten.**

(57) Zur Zwischenspeicherung von Befehlsworten nach dem Auslesen aus einem Befehlsspeicher dient eine Anordnung aus einem oder mehreren Pufferspeichern (20 bis 23), die zum Einschreiben und zum Auslesen durch einen zyklisch arbeitenden Schreibzähler (26) und einen zyklisch arbeitenden Lesezähler (27) adressiert werden. Eine die beiden Zähler (26, 27) kontrollierende Überwachungsschaltung (28) verhindert, daß der Schreibzähler (26) den Lesezähler (27) überholt.

EP 0 116 883 A2

./...

FIG. 1

Schaltungsanordnung zur Zwischenspeicherung
von Befehlsworten

Die Erfindung betrifft eine Schaltungsanordnung zur Zwischenspeicherung von Befehlsworten, die aus dem Speicher einer Datenverarbeitungseinrichtung ausgelesen und anschließend im Rahmen einer Befehlsdurchführung verarbeitet werden, mit einer Zwischenspeicheranordnung, die das Auslesen von Befehlsworten gleichzeitig mit dem Durchführen zuvor ausgelesener Befehlsworte ermöglicht.

In einer Datenverarbeitungseinrichtung werden Befehlsworte gemäß einer durch ein Programm vorgegebenen Reihenfolge aus einem Befehlsspeicher ausgelesen und veranlassen dann die Durchführung der durch ihren Informationsinhalt vorgegebenen Datenverarbeitungsvorgänge. Die Leistung einer Datenverarbeitungseinrichtung hängt wesentlich davon ab, mit welcher Geschwindigkeit die Befehlsworte aus dem Befehlsspeicher ausgelesen werden können, wenn die Verarbeitungszeit der Befehlsworte kürzer ist als die Zeit für den Zugriff zum Befehlsspeicher. Bekanntlich erfordert das Auslesen von Befehlsworten den größeren Anteil der Betriebszeit einer Datenverarbeitungseinrichtung, da mehr Befehlsworte ausgelesen und verarbeitet werden als Operanden. Es wurde deshalb im Laufe der Entwicklung der Datenverarbeitungstechnik eine Beschleunigung der Befehlszugriffe angestrebt, die im wesentlichen zu zwei Verfahrensprinzipien führte, welche aber jeweils Nachteile haben.

So wird beispielsweise bei der Befehlszwischenspeicherung das sogenannte FIFO (First In, First Out)-Prinzip angewendet, bei dem ein Befehlswort aus dem Befehlsspeicher ausgelesen werden kann, während ein vorhergehender Befehl noch abgearbeitet wird. Dieses Prinzip kann auch mehrfach parallel angewendet werden. Es ist jedoch einerseits nur kostspielig zu verwirklichen, andererseits trotz der Möglichkeit, daß ein Prozessor zu einem FIFO-Speicher schnell zugreifen kann, relativ langsam. Dies ist darauf zurückzuführen, daß ein FIFO-Speicher ähnlich wie ein Schieberegister die in ihn eingespeicherten Informationen durch seinen Speicherbereich schieben muß, bevor sie am Ausgang ausgegeben werden können.

Eine andere Möglichkeit zur Beschleunigung der Befehlszugriffe besteht darin, zwischen dem Befehlsspeicher und dem die Befehle ausführenden Rechner bzw. Prozessor eine Speicherhierarchie vorzusehen, die aus Zwischenspeichern aufgebaut ist, welche einen besonders schnellen Zugriff ermöglichen und in die kleinere Blöcke zusammenhängender Befehlsworte eingespeichert werden können. Die für eine solche Speicherhierarchie erforderliche Schaltungstechnik ist sehr aufwendig, und es ist ein sehr schnell arbeitendes und damit kostspieliges Speichermedium nötig.

Der Erfindung liegt die Aufgabe zugrunde, die Beschleunigung von Befehlszugriffen bei tragbarem schaltungstechnischem Mehraufwand zu erreichen und Wartezeiten im Rechner bzw. Prozessor einer Datenverarbeitungseinrichtung durch möglichst einfache Maßnahmen zu vermeiden.

Diese Aufgabe wird für eine Schaltungsanordnung eingangs genannter Art erfindungsgemäß dadurch gelöst, daß als Zwischenspeicheranordnung ein oder mehrere Pufferspeicher vorgesehen sind, die zum Einschreiben und zum Auslesen durch einen zyklisch arbeitenden Schreibzähler und einen zyklisch arbeitenden Lesezähler adressiert werden, und daß der Schreibzähler und der Lesezähler jeweils Ausgangssignale an eine Überwachungsschaltung abgeben, die ein Überholen des Lesezählers durch den Schreibzähler verhindert.

Die Erfindung sieht also als Zwischenspeicher relativ einfache und billige Pufferspeicher vor, in die bei geeigneter Größe des Speichervolumens mehrere Befehlsworte eingeschrieben werden können. Dieses Einschreiben und auch das Auslesen der Befehlsworte wird jeweils durch einen Zähler gesteuert, der die Pufferspeicheranordnung adressiert. Die beiden Zähler können somit als Schreibzähler und als Lesezähler bezeichnet werden. Sie geben während der Adressiervorgänge mit jedem Zählschritt ein Ausgangssignal an eine Überwachungsschaltung ab, die verhindert, daß der Schreibzähler den Lesezähler überholt, was bedeuten würde, daß der Schreibzähler einen Speicherplatz der Pufferspeicheranordnung zum Einschreiben eines Befehlswortes adressiert, an dem noch ein Befehlswort vorhanden ist, welches abzuarbeiten, d.h. für einen Rechner bzw. Prozessor auszulesen ist.

Eine solche Schaltungsanordnung arbeitet analog einem FIFO-Speicher, ist aber erheblich billiger und schneller als der FIFO-Speicher, da die eingeschriebenen Befehlsworte nicht erst durch die Pufferspeicheranordnung hindurchgeschoben werden müssen, bevor sie an einem Ausgang ausgelesen werden können. Die Befehlsworte können hingegen sofort nach dem Einschreiben durch einfaches Adressieren wieder abgerufen werden, so daß sich gegenüber einem FIFO-Speicher bei erheblich billigerem Aufbau eine beachtliche Arbeitsbeschleunigung ergibt. Dies ist besonders wichtig für das Ausführen von Sprungbefehlen.

Bei einer Schaltungsanordnung nach der Erfindung wird eine fast vollständige Trennung des Auslesens der Befehlsworte aus dem Befehlsspeicher von deren Verarbeitung im angeschlossenen Rechner bzw. Prozessor erreicht. Aus diesem Grunde kann das Auslesen der Befehlsworte auch mit Hilfe eines Hilfsrechners veranlaßt werden, der durch einen Hauptrechner nur dann synchronisiert werden muß, wenn der durch ein Programm vorgegebene lineare Befehlsablauf beispielsweise durch einen Sprungbefehl oder durch einen Zugriff zu einem Operanden unterbrochen wird.

Für ein noch zu beschreibendes Ausführungsbeispiel einer Schaltungsanordnung nach der Erfindung sind bei Speicherung von 16 Befehlsworten mit jeweils 16 Bit Länge nur sieben integrierte Schaltungen erforderlich.

Die Erfindung wird im folgenden anhand der Figuren näher erläutert. Es zeigen:

Fig. 1    ein Ausführungsbeispiel der Erfindung für Befehlsworte mit 16 Bit Länge,

Fig. 2    die Einordnung einer Schaltungsanordnung nach der Erfindung in eine Datenverarbeitungseinrichtung in Blockdarstellung,

Fig. 3    den zeitlichen Ablauf von Signalen für die Einleitung der Zwischenspeicherung nach Durchführung eines Sprungbefehls,

Fig. 4    den zeitlichen Ablauf von Signalen bei der Durchführung eines Befehls ohne Operandenzugriff und

Fig. 5  eine Tabelle, die für zwei unterschiedliche
Fälle die Abgabe von Überwachungssignalen
durch die Überwachungsschaltung während des
Zählbetriebs angibt.

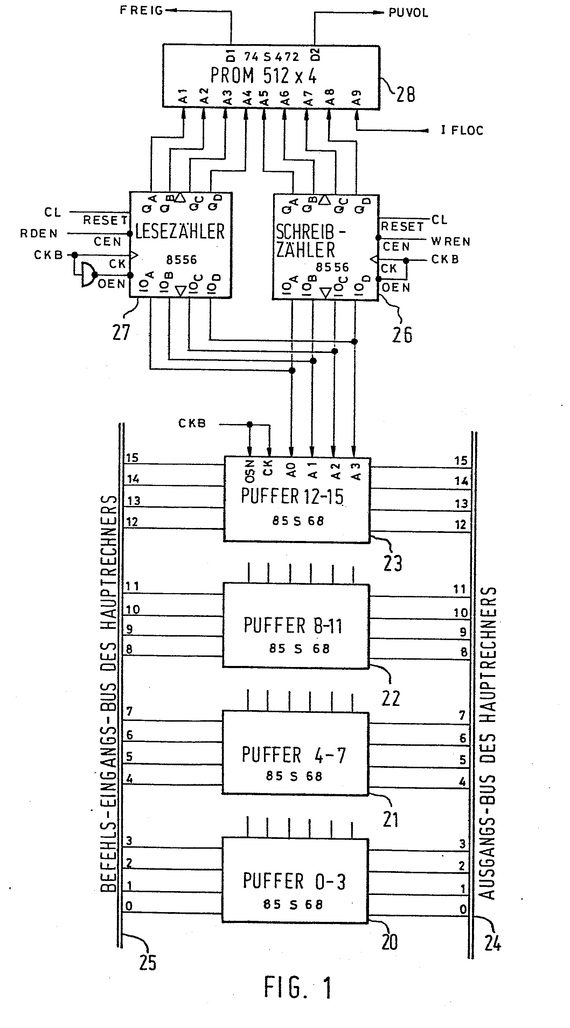

In Fig. 1 sind als Pufferspeicheranordnung vier integrierte Schaltkreise 20 bis 23 vom Typ 85S68 dargestellt,
deren Eingänge mit dem Ausgangsbus 24 eines Befehlsspeichers, beispielsweise des Hauptspeichers einer Datenverarbeitungseinrichtung, verbunden sind. Die Ausgänge
sind mit dem Befehlseingang 25 des Hauptrechners der Datenverarbeitungseinrichtung verbunden. Die integrierten
Schaltkreise bestehen im dargestellten Ausführungsbeispiel jeweils aus 16 Registern mit einer Breite von je 4
Bit, so daß in dieser Anordnung also Befehlsworte mit
einer Länge von 16 Bit gespeichert werden können. Entsprechend sind die Eingangsleitungen zu den Schaltkreisen 20 bis 23 mit 0 bis 15 bezeichnet. Die gleichartig
bezeichneten Ausgänge werden abhängig von der Adressierung der integrierten Schaltkreise 20 bis 23 an den
Adreßeingängen A0 bis A3 vom jeweils adressierten Register angesteuert.

Der Lesezähler 27 und der Schreibzähler 26 steuern
zyklisch mit jedem ihnen an den Eingängen CK zugeführten Taktsignal CKB nacheinander die Adreßleitungen der
integrierten Schaltkreise 20 bis 23 der Pufferspeicheranordnung an.

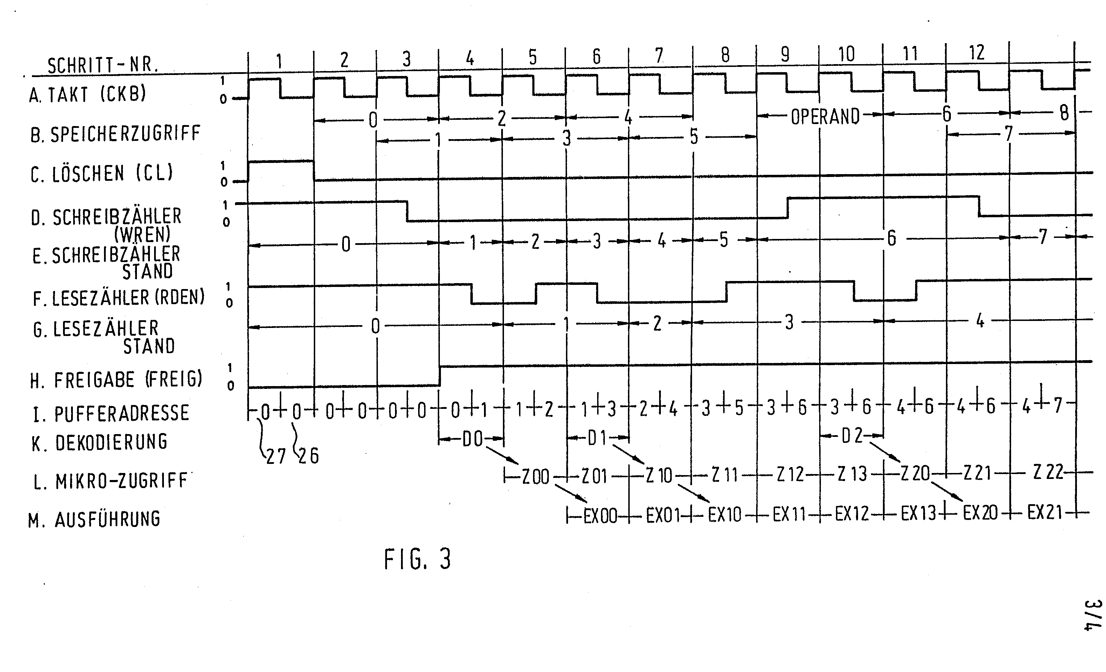

Der Lesezähler 27 adressiert in der ersten Takthälfte
des Signals CKB (CKB = 1) das jeweils auszulesende
Register. In der zweiten Takthälfte (CKB = 0) wird der
ausgelesene Register-Inhalt in Zwischenspeichern, die
sich in den integrierten Schaltkreisen 20 bis 23 befinden, abgespeichert. Hierzu dient das Signal OSN, das
mit dem Takt CKB identisch ist. Gleichzeitig adressiert
der Schreibzähler 26 in der zweiten Takthälfte (CKB = 0) gemäß seinem Zustand ein anderes Register in den integrierten Schaltkreisen 20 bis 23, in die ein neues Befehlswort einzuschreiben ist. Dieser Zusammenhang ist auch in Fig. 3 in Zeile 7 dargestellt. Die beiden Zähler 26 und 27 arbeiten synchron, was bedeutet, daß sie laufend mit Taktimpulen versorgt werden, jedoch ihren Zählvorgang nur dann fortsetzen, wenn am jeweiligen Eingang CEN ein Freigabesignal erscheint, welches noch zu beschreiben ist.

Die Zähler 26 und 27 haben ferner einen RESET-Eingang, über den sie gelöscht werden können.

Zur vorstehend beschriebenen Arbeitsweise sind die jeweiligen Ausgänge $IO_A$, $IO_B$, $IO_C$ und $IO_D$ der beiden Zähler 26 und 27 in der in Fig. 1 gezeigten Weise zusammengeführt und gemeinsam mit den Adressiereingängen AO bis A3 der die Pufferspeicheranordnung bildenden integrierten Schaltkreise 20 bis 23 verbunden. Die Zählausgänge der beiden Zähler 26 und 27 können über den jeweiligen Eingang OEN durch das Signal CKB ein- bzw. ausgeschaltet werden.

Es sind ferner Zählausgänge $Q_A$ bis $Q_D$ bei beiden Zählern 26 und 27 vorgesehen, die getrennt auf die Eingänge Al bis A9 eines programmierbaren Festwertspeichers (PROM) geführt sind. Dieser Festwertspeicher arbeitet als Überwachungsschaltung und kann die Zählerstände der beiden Zähler 26 und 27 nach dem modulo-16-Prinzip auswerten. Wenn der Zählerstand des Schreibzählers 26 z.B. einen Zählschritt unter dem Zählerstand des Lesezählers 27 steht, so kann der Festwertspeicher 28 ein Signal PUVOL an einen in Fig. 1 nicht dargestellten, dem Hauptspeicher der Datenverarbeitungseinrichtung zugeordneten Speicherprozessor abgeben, welches im logischen Zustand 1 angibt,

daß die Pufferspeicheranordnung vollständig gefüllt ist.
Der Festwertspeicher 28 kann ferner ein Signal FREIG
abgeben, welches den Hauptrechner darüber informiert,
daß die zur Abarbeitung eines Befehls erforderliche
Mindestmenge an Befehlsworten in der Pufferspeicheranordnung enthalten ist. An dem Eingang A9 des Festwertspeichers 28 kann außerdem ein Signal IFLOK von dem
Speicherprozessor zugeführt werden, mit dem diese erforderliche Mindestmenge an Befehlsworten auf zwei unterschiedliche Werte eingestellt werden kann. · ·

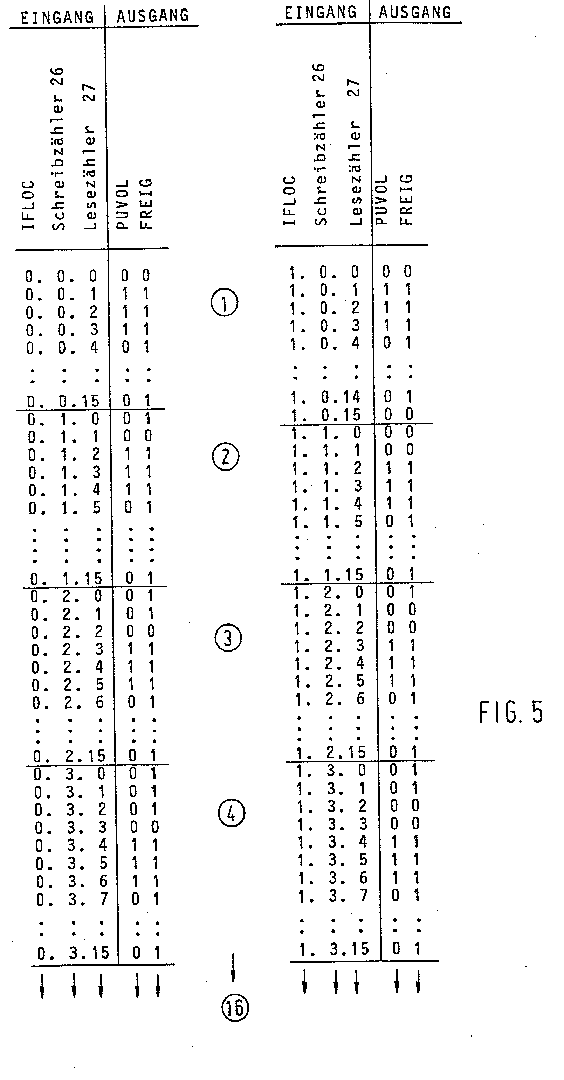

Die Programmierung des Festwertspeichers 28 wird weiter
unten anhand der Fig. 5 noch näher erläutert.

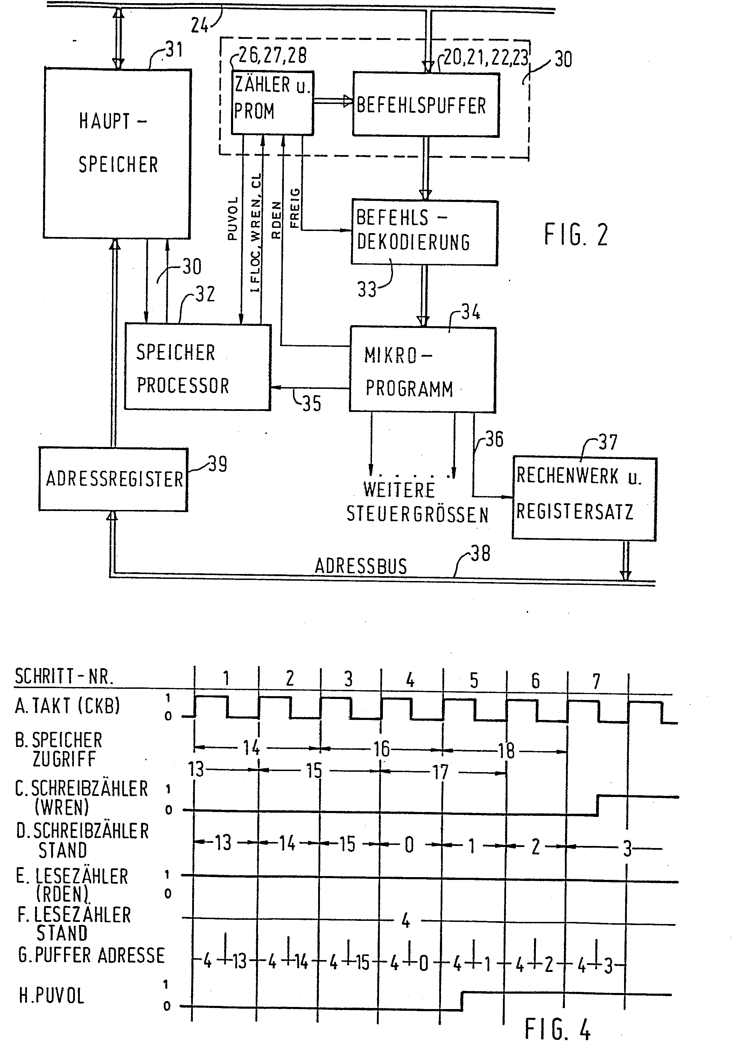

In Fig. 2 sind die für die Anwendung der Erfindung relevanten Teile bzw. Funktionseinheiten einer Datenverarbeitungseinrichtung mit ihren gegenseitigen Verbindungen
dargestellt. Die in Fig. 1 gezeigte Schaltungsanordnung
ist in Fig. 2 insgesamt mit 30 bezeichnet und steht mit
dem Hauptspeicher 31 der Datenverarbeitungseinrichtung
über den Ausgangsbus 24 in Verbindung. Der Hauptspeicher 31
möge auch den Befehlsspeicher enthalten. Ihm ist ein Speicherprozessor 32 zugeordnet, welcher mit ihm über die Verbindungen 30 in an sich bekannter Weise korrespondiert.
Der Speicherprozessor 32 erhält aus der Überwachungsschaltung 28 das Signal PUVOL, welches bereits erläutert wurde.
Er gibt neben dem Signal IFLOC und einem Löschsignal CL
ein Schreib-Freigabesignal WREN an den Schreibzähler 26 ab.

Ein Befehlswort, welches aus der Pufferspeicheranordnung
20 bis 23 ausgelesen wird, gelangt in eine Befehlsdecodierung 33 und wird dann durch ein Mikroprogramm 34 interpretiert, welches an seinen Ausgängen in an sich bekannter
Weise Steuergrößen abgibt. Das Mikroprogramm korrespondiert mit dem Speicherprozessor über Signalleitungen 35 und gibt ein Lese-Freigabesignal RDEN an den Lesezähler 27 ab. Das Lesen aus der Pufferspeicheranordnung 20 bis 23 erfolgt also unter Steuerung des Mikroprogramms 34, während das Einschreiben in die Pufferspeicheranordnung 20 bis 23 abhängig von dem Mikroprogramm 34 durch den Speicherprozessor 32 gesteuert wird.

Das Mikroprogramm 34 steuert abhängig von seinem Ablauf über den Signalweg 36 ein Rechenwerk mit Registersatz, in Figur 2 als eine Funktionseinheit 37 bezeichnet. Abhängig vom Betrieb des Mikroprogramms 34 kann diese Einheit 37 dann über einen Adreßbus 38 und ein Adreßregister 39 den Hauptspeicher 31 adressieren und weitere, hier nicht interessierende Datenverarbeitungen veranlassen.

Nachdem die Einordnung der in Figur 1 gezeigten Schaltungsanordnung in eine Datenverarbeitungseinrichtung anhand der Figur 2 gezeigt wurde, soll nun anhand der Figuren 3 und 4 die hier relevante Arbeitsweise der Datenverarbeitungseinrichtung für zwei unterschiedliche Fälle weiter erläutert werden. Hierzu zeigen die Figuren 3 und 4 Signalverläufe innerhalb der Datenverarbeitungseinrichtung, insbesondere in der Schaltungsanordnung nach Figur 1.

In Figur 3 ist im einzelnen anhand von Signalverläufen der zeitliche Ablauf des Betriebes der Pufferspeicheranordnung 20 bis 23 mit den zugehörigen Zählern 26, 27 und der Überwachungsschaltung 28 gezeigt. Dabei wird vorausgesetzt, daß der Hauptspeicher 31 mit einfachem Überlappungsbetrieb arbeitet. Die Signalverläufe in Figur 3 gelten für die Einleitung des Pufferbetriebs nach Durchführung eines Sprungbefehls. Der zeitliche Ablauf ist in einzelne Schritte 1 bis 12 unterteilt, die den Perioden eines Taktsignals CKB entsprechen, dessen Erzeugung an sich bekannt ist und daher in den Figuren nicht gezeigt ist.

0116883

Zur Einleitung des Pufferbetriebs müssen der Schreibzähler 26 und der Lesezähler 27 gelöscht werden, um ihren Anfangszustand einzunehmen. Dies erfolgt im Schritt 1 durch den logischen Zustand 1 des Löschsignals CL, welches den Rücksetzeingängen der Zähler 26 und 27 zugeführt wird. Dieses Signal ist in Fig. 3 bei C dargestellt. Es wird im Speicherprozessor 32 erzeugt, und bei seinem Auftreten wird auch der Zugriff zum ersten Befehlswort im Hauptspeicher 31 über den Signalweg 30 durch den Speicherprozessor 32 veranlaßt. Dieser Zugriff ist in Fig. 3 bei B dargestellt und beginnt mit dem Schritt 2. Der Zugriff läuft während der Schritte 2 und 3 ab und ist als erster Zugriff mit 0 bezeichnet. Während der Schritte 3 und 4 folgt der überlappende Zugriff zum zweiten Befehlswort, während der Schritte 4 und 5 der Zugriff zum dritten Befehlswort. Diese einander überlappenden Zugriffsvorgänge setzen sich fort bis zum Schritt 8, mit dem die Zugriffsfolge für sechs Befehlsworte 0 bis 5 endet.

Der Zugriff zum Befehlswort 0 bewirkt, daß dieses Befehlswort während des Schrittes 3 aus dem Hauptspeicher 31 ausgelesen wird. Infolge der Überwachung dieses Vorgangs durch den Speicherprozessor 32 kann dieser das Signal WREN veranlassen, welches in Fig. 3 bei D dargestellt ist und in der Mitte des Schrittes 3 beginnt. Dieses Signal bewirkt mit der ansteigenden Flanke des in Fig. 3 bei A dargestellten Taktsignals CKB am Ende des Schrittes 3 eine Weiterschaltung des Schreibzählers 26 um einen Zählschritt. Dieser Wechsel vom Zählerstand 0 zum Zählerstand 1 ist in Fig. 3 bei E dargestellt. Mit diesem Wechsel wird das erste Befehlswort in die Zeile 0 der Pufferspeicheranordnung 20 bis 23 eingeschrieben. Entsprechend wird das zweite Befehlswort 1 am Endes des Schrittes 4 in die Zeile 1 und das dritte Befehlswort am Ende des Schrittes 5 in die Zeile 2 der Pufferspeicheranordnung 20 bis 23 eingeschrieben. Das sechste Befehlswort wird schließlich am Ende des Schrittes 8 in die Zeile 5 der Pufferspeicheranordnung 20 bis 23 eingeschrieben. Dieser Vorgang ist in Fig. 3 bei J dargestellt.

Fig. 3 zeigt bei H das Signal FREIG, welches am Ende des Schrittes 3 entsteht und gemäß Fig. 2 die Befehlsdecodierung 33 ansteuert. Das erste, in Zeile 0 der Pufferspeicheranordnung 20 bis 23 enthaltene Befehlswort wird dadurch decodiert, daß der Lesezähler 27 noch auf dem Zählerstand 0 steht. Dies ist in Fig. 3 bei G gezeigt. Der Decodierungsvorgang findet während des Schrittes 4 statt und ist für das Befehlswort 0 mit D0 bezeichnet und bei K dargestellt. Gleichzeitig wird durch das Mikroprogramm 34 das Signal RDEN an den Lesezähler 27 abgegeben, wodurch dieser am Ende des Schrittes 4 vom Zählschritt 0 auf den Zählschritt 1 umgeschaltet wird. In Fig. 3 ist bei L der Mikrozugriff dargestellt, den die decodierten Befehlsworte veranlassen. Das Mikroprogramm 34 bewirkt dann die in Fig. 3 bei M gezeigte Ausführung der Befehle. So ist beispielsweise zu erkennen, daß das decodierte Befehlswort D0 den Mikrozugriff in Zeile Z00 des Mikroprogramms veranlaßt, wodurch wiederum die Ausführung EX00 während des Schrittes 6 erfolgt. Das Mikroprogramm 34 gibt dann wieder ein Signal RDEN ab, wodurch der Lesezähler 27 seinen Zählerstand am Ende des Schrittes 6 von 1 auf 2 erhöht. Da nach dem Befehlswort D0 kein Operandenzugriff aus dem Hauptspeicher 31 erfolgt, wird die Decodierung des Befehls 1, also das zweiten Befehls, aus Zeile 1 der Pufferspeicheranordnung 20 bis 23 während des Schrittes 6 vorgenommen. In Fig. 3 ist bei K die Decodierung D1 des zweiten Befehlswortes dargestellt. Nimmt man nun an, daß der zweite Befehl zwei Worte umfaßt, wobei das zweite Wort die Adresse für einen Operandenzugriff aus dem Hauptspeicher 31 ist, so wird dies während des Schritts 7 bei dem dann erfolgenden Mikrozugriff Z10 erkannt und das zweite Wort des Befehls aus der zweiten Zeile der Pufferspeicheranordnung 20 bis 23 in das Adreßregister 30 eingespeichert. Gleichzeitig wird ein weiteres Signal RDEN abgegeben, wodurch am Ende des Schrittes 7 der Lesezähler von dem zweiten auf den dritten Zählschritt geschaltet wird. Auf nicht dargestellte Weise wird infolge des Operandenzugriffs der Speicherprozessor 32 darüber informiert, daß kein weiterer Befehlszugriff mehr gestartet werden darf.

Für den Operandenzugriff muß der Hauptspeicher 31 adressiert werden. Diese Adressierung erfolgt im Schritt 8, ist in Fig. 3 jedoch nicht näher dargestellt. Der darauf folgende Zugriff zum Operanden erfolgt in den Schritten 9 und 10 und ist in Fig. 3 bei B dargestellt. Mit dem Schritt 11 wird dann wieder wie beschrieben ein Befehlswort in die Pufferspeicheranordnung 20 bis 23 eingeschrieben. Insgesamt zeigt Fig. 3, daß vor dem Operandenzugriff zwei Befehlsworte und nach dem Operandenzugriff zwei Befehlsworte in der Pufferspeicheranordnung 20 bis 23 bereitgehalten werden.

Fig. 4 zeigt eine Darstellung ähnlich wie in Fig. 3, jedoch für die Ausführung eines zeitaufwendigen Befehls, der ohne Operandenzugriffe abzuarbeiten ist. Dabei kann es sich beispielsweise um eine Multiplikation handeln. Während dieses Vorgangs bleibt der Lesezähler 27 unverändert, wie in Fig. 4 bei E und F gezeigt, jedoch wird der Schreibzähler mit dem Eintreffen neuer Befehlsworte weitergezählt, wie in Fig. 4 bei C und D gezeigt. Im übrigen laufen die Vorgänge analog den bereits anhand der Fig. 3 beschriebenen ab.

Wenn die Pufferspeicheranordnung 20 bis 23 gefüllt ist, was beispielsweise beim Schritt 5 der Fall sein möge, so wird zu diesem Zeitpunkt von der Überwachungsschaltung 28 das Signal PUVOL abgegeben, welches in Fig. 4 bei H dargestellt ist. Ein weiteres Auslesen von Befehlsworten aus dem Speicher 31 in die Pufferspeicheranordnung 20 bis 23 würde diese zum Überlaufen bringen. Deshalb wird ein solches Auslesen durch das Signal PUVOL im Speicherprozessor 32 verhindert, und die noch laufenden Zugriffe zu dem 17. und 18. Befehlswort werden abgeschlossen. Am Ende der Schritte 5 und 6 werden die Befehlsworte in die Zeilen 1 und 2 der Pufferspeicheranordnung 20 bis 23 eingeschrieben, und am Ende des Schrittes 6 wird der Schreibzähler 26 zum letzten Mal weitergeschaltet und zeigt dann auf die Zeile 3 der Pufferspeicheranordnung 20 bis 23. Diese Vorgänge sind in Fig. 3 bei C und D dargestellt.

Ersichtlich wird das Signal PUVOL von der Überwachungsschaltung bzw. dem Festwertspeicher 28 ausgegeben, wenn die Differenz zwischen dem Inhalt des Lesezählers 27 und dem Inhalt des Schreibzählers 1, 2 oder 3 beträgt. Das Signal PUVOL hat eine Länge, die der Länge dieses jeweiligen Zustandes entspricht.

In Fig. 5 ist tabellarisch dargestellt, wie der Festwertspeicher 28 programmiert sein muß, damit die vorstehend beschriebene Arbeitsweise der Schaltungsanordnung gewährleistet ist. Für 16 unterschiedliche Durchläufe des Modulo-16-Schreibzählers bzw. Lesezählers 26 bzw. 27 sind 256 verschiedene Speicherzustände erforderlich, so daß der Festwertspeicher 28 für zwei unterschiedliche Werte des Signals IFLOC insgesamt ein Volumen von 512 unterschiedlichen Speicherzuständen haben muß. Von den 16 möglichen Durchläufen des Schreibzählers 26 bzw. des Lesezählers 27 sind in Fig. 5 nur vier dargestellt, wodurch im Hinblick auf die regelmäßige Struktur des Speicherinhalts eine genaue Darstellung für die Durchläufe 5 bis 16 nicht erforderlich ist.

Die tabellarische Darstellung nach Fig. 5 zeigt für die beiden unterschiedlichen Werte des Signals IFLOC jeweils die Eingangssignale und die Ausgangssignale des Festwertspeichers 28. Die Eingangssignale werden durch das Signal IFLOC, die Zählausgänge $Q_A$ bis $Q_D$ des Schreibzählers 26 und die Zählausgänge $Q_A$ bis $Q_D$ des Lesezäh-lers 27 gebildet. Die Ausgangssignale sind die bereits beschriebenen Signale PUVOL und FREIG.

Wie bereits erläutert, wird das Signal IFLOC von dem Speicherprozessor 32 abgegeben und kann zwei unterschiedliche erforderliche Mindestmengen an Befehlsworten kennzeichnen, die in der Pufferspeicheranordnung 20 bis 23 enthalten sein müssen, damit Befehle abgearbeitet werden können. Der linke Teil der tabellarischen Darstellung in Fig. 5 gilt für den Fall, daß das Signal IFLOC den logischen Zustand 0 hat, während der rechte Teil für den Fall gilt, daß das Signal IFLOC den logischen Zustand 1 hat.

Der linke Teil der Darstellung in Fig. 5 zeigt nun, daß ein Signal PUVOL mit dem logischen Zustand 1 immer dann abgegeben wird, wenn der Inhalt des Lesezählers 27 um eine, zwei oder drei Adressen größer ist als der Inhalt des Schreibzählers 26. Dabei hat das Signal FREIG den logischen Zustand 0, wenn die Inhalte des Lesezählers 27 und des Schreibzählers 26 gleich sind. In allen anderen Fällen hat das Signal FREIG den logischen Zustand 1. Die Freigabe für eine weitere Abarbeitung von Befehlen mit dem logischen Zustand 1 des Signals FREIG erfolgt also für den logischen Zustand 0 des Signals IFLOC, wenn mindestens ein Befehlswort in der Pufferspeicheranordnung 20 bis 23 enthalten ist.

Der rechte Teil der Darstellung in Fig. 5 betrifft den Fall, daß das Signal IFLOC den logischen Zustand 1 hat, wenn mindestens zwei Befehlsworte in der Pufferspeicheranordnung 20 bis 23 enthalten sind. Hierbei hat das Signal PUVOL gleichfalls den logischen Zustand 1, wenn der Inhalt des Lesezählers 27 um eine, zwei oder drei Adressen größer ist als der Inhalt des Schreibzählers 26. Das Signal FREIG hat den logischen Zustand 0, wenn die Inhalte des Lesezählers 27 und des Schreibzählers 26 um eine Adresse größer ist als der Inhalt des Lesezählers 27. In allen anderen Fällen hat das Signal FREIG den logischen Zustand 1. Es gibt also die weitere Abarbeitung von Befehlen dann frei, wenn mindestens zwei Befehlsworte in der Pufferspeicheranordnung 20 bis 23 enthalten sind.

# Patentansprüche

1. Schaltungsanordnung zur Zwischenspeicherung von Befehlsworten, die aus dem Befehlsspeicher einer Datenverarbeitungseinrichtung ausgelesen und anschließend im Rahmen einer Befehlsdurchführung verarbeitet werden, mit einer Zwischenspeicheranordnung, die das Auslesen von Befehlsworten gleichzeitig mit dem Durchführen zuvor ausgelesener Befehlsworte ermöglicht, dadurch gekennzeichnet, daß als Zwischenspeicheranordnung ein oder mehrere Pufferspeicher (20 bis 23) vorgesehen sind, die zum Einschreiben und zum Auslesen durch einen zyklisch arbeitenden Schreibzähler (26) und einen zyklisch arbeitenden Lesezähler (27) adressiert werden, und daß der Schreibzähler (26) und der Lesezähler (27) jeweils Ausgangssignale an eine Überwachungsschaltung (28) abgeben, die ein Überholen des Lesezählers (27) durch den Schreibzähler (26) verhindert.

2. Schaltungsanordnung nach Anspruch 1, dadurch gekennzeichnet, daß der Schreibzähler (26) und der Lesezähler (27) synchron taktgesteuert sind.

3. Schaltungsanordnung nach Anspruch 1 oder 2, dadurch gekennzeichnet, daß als Überwachungsschaltung ein programmierbarer Festwertspeicher (28) vorgesehen ist, der ein Freigabesignal (FREIG) für das Decodieren ausgelesener Befehlsworte abgibt, wenn eine vorbestimmte Mindestmenge an Befehlsworten in der Zwischenspeicheranordnung (20 bis 23) enthalten ist.

4. Schaltungsanordnung nach Anspruch 3, dadurch gekennzeichnet, daß der Festwertspeicher (28) so programmiert ist, daß er das Freigabesignal (FREIG) nur bei einem vorgegebenen Unterschied der Inhalte des Schreibzählers (26) und des Lesezählers (27) abgibt.

5. Schaltungsanordnung nach einem der Ansprüche 1 bis 4, dadurch gekennzeichnet, daß die Überwachungsschaltung (28) ein die Füllung der Zwischenspeicheranordnung (20 bis 23) angebendes Signal (PUVOL) an einen mit dem Befehlsspeicher (31) verbundenen Speicherprozessor (32) abgibt, wenn sich die Inhalte des Schreibzählers (26) und des Lesezählers (27) um eine vorbestimmte Zahl Adressen unterscheiden.

FIG. 1

FIG. 2

FIG. 4

FIG. 3

| EINGANG | | | AUSGANG | |
|---|---|---|---|---|
| IFLOC | Schreibzähler 26 | Lesezähler 27 | PUVOL | FREIG |
| 0. | 0. | 0 | 0 | 0 |
| 0. | 0. | 1 | 1 | 1 |
| 0. | 0. | 2 | 1 | 1 |
| 0. | 0. | 3 | 1 | 1 |
| 0. | 0. | 4 | 0 | 1 |
| : | : | : | : | : |
| 0. | 0. | 15 | 0 | 1 |
| 0. | 1. | 0 | 0 | 1 |
| 0. | 1. | 1 | 0 | 0 |
| 0. | 1. | 2 | 1 | 1 |
| 0. | 1. | 3 | 1 | 1 |
| 0. | 1. | 4 | 1 | 1 |
| 0. | 1. | 5 | 0 | 1 |
| : | : | : | : | : |
| 0. | 1. | 15 | 0 | 1 |
| 0. | 2. | 0 | 0 | 1 |
| 0. | 2. | 1 | 0 | 1 |
| 0. | 2. | 2 | 0 | 0 |
| 0. | 2. | 3 | 1 | 1 |
| 0. | 2. | 4 | 1 | 1 |
| 0. | 2. | 5 | 1 | 1 |
| 0. | 2. | 6 | 0 | 1 |
| : | : | : | : | : |
| 0. | 2. | 15 | 0 | 1 |
| 0. | 3. | 0 | 0 | 1 |
| 0. | 3. | 1 | 0 | 1 |
| 0. | 3. | 2 | 0 | 1 |
| 0. | 3. | 3 | 0 | 0 |
| 0. | 3. | 4 | 1 | 1 |
| 0. | 3. | 5 | 1 | 1 |
| 0. | 3. | 6 | 1 | 1 |
| 0. | 3. | 7 | 0 | 1 |
| : | : | : | : | : |
| 0. | 3. | 15 | 0 | 1 |

| EINGANG | | | AUSGANG | |
|---|---|---|---|---|
| IFLOC | Schreibzähler 26 | Lesezähler 27 | PUVOL | FREIG |
| 1. | 0. | 0 | 0 | 0 |
| 1. | 0. | 1 | 1 | 1 |
| 1. | 0. | 2 | 1 | 1 |
| 1. | 0. | 3 | 1 | 1 |
| 1. | 0. | 4 | 0 | 1 |
| : | : | : | : | : |
| 1. | 0. | 14 | 0 | 1 |
| 1. | 0. | 15 | 0 | 0 |
| 1. | 1. | 0 | 0 | 0 |
| 1. | 1. | 1 | 0 | 0 |
| 1. | 1. | 2 | 1 | 1 |
| 1. | 1. | 3 | 1 | 1 |
| 1. | 1. | 4 | 1 | 1 |
| 1. | 1. | 5 | 0 | 1 |
| : | : | : | : | : |
| 1. | 1. | 15 | 0 | 1 |
| 1. | 2. | 0 | 0 | 1 |
| 1. | 2. | 1 | 0 | 0 |
| 1. | 2. | 2 | 0 | 0 |
| 1. | 2. | 3 | 1 | 1 |
| 1. | 2. | 4 | 1 | 1 |
| 1. | 2. | 5 | 1 | 1 |
| 1. | 2. | 6 | 0 | 1 |
| : | : | : | : | : |
| 1. | 2. | 15 | 0 | 1 |
| 1. | 3. | 0 | 0 | 1 |
| 1. | 3. | 1 | 0 | 1 |
| 1. | 3. | 2 | 0 | 0 |
| 1. | 3. | 3 | 0 | 0 |
| 1. | 3. | 4 | 1 | 1 |
| 1. | 3. | 5 | 1 | 1 |
| 1. | 3. | 6 | 1 | 1 |
| 1. | 3. | 7 | 0 | 1 |
| : | : | : | : | : |
| 1. | 3. | 15 | 0 | 1 |

① ② ③ ④ ⑯

FIG. 5